# FASCICULE DE BREVET EUROPEEN

(11) **EP 3 303 096 B1**
(45) Date de publication et mention de la délivrance du brevet: **20.10.2021**
(21) Numéro de dépôt: 16726508.1
(22) Date de dépôt: 24.05.2016
(51) Int. Cl.: B61L 23/34, B61L 25/02, B61C 17/12, B61G 7/00

(54) **SYSTÈME AUTOMATIQUE DE COUPLAGE DE VÉHICULES FERROVIAIRES ET PROCÉDÉ ASSOCIÉ**
AUTOMATISCHES SYSTEM ZUM KUPPELN VON SCHIENENFAHRZEUGEN UND VERFAHREN DAZU
AUTOMATIC SYSTEM FOR COUPLING RAIL VEHICLES AND PROCESS THEREFOR

(30) Priorité: 29.05.2015 FR 1554909
(43) Date de publication de la demande: 11.04.2018
(73) Titulaire: Metrolab, 75015 Paris (FR); Ricardo UK Limited, West Sussex BN43 5FG (GB)
(72) Inventeur: EL KHOURY, Jacques, 75010 Paris (FR); FIORONI, Sylvain, 75010 Paris (FR); UHRICH, Damien, 75010 Paris (FR); HEATHCOTE, Michael, Shoreham-by-Sea, West Sussex BN43 5FG (GB); MEISTER, Roland, Shoreham-by-Sea, West Sussex BN43 5FG (GB)
(74) Mandataire: Lavoix
(86) Numéro de dépôt international: PCT/EP2016/061681
(87) Numéro de publication internationale: WO 2016/193063

(56) Documents cités:
- EP-A1- 2 322 404
- DE-A1- 19 529 919
- DE-A1- 19 946 168
- DE-A1-102007 039 687
- DE-A1-102012 009 114
- JP-B2- 3 420 840
- US-A1- 2003 182 030

## Description

La présente invention concerne un système automatique de couplage de véhicules ferroviaires.

Afin de diminuer le temps de manœuvre de couplage et pour améliorer la flexibilité de composition des trains sur un réseau ferroviaire, il est pertinent d'automatiser la manœuvre de couplage mécanique entre deux véhicules ferroviaires.

DE 43 02 377 A1 décrit un système automatique de manœuvre de wagons de fret contrôlant la vitesse de chaque wagon par son système de freinage. En fonction de la distance séparant deux wagons, le système de freinage régule une vitesse prédéterminée de déplacement.

DE 10 2007 039687 A1 décrit un système automatique de couplage comprenant un dispositif d'enregistrement d'image adapté pour enregistrer des images d'un premier et d'un deuxième véhicule, et une unité d'évaluation connectée au dispositif d'enregistrement pour évaluer les informations contenues dans les images enregistrées et permettre une opération de couplage entre le premier et le deuxième véhicule.

JP 3 420840 B2 décrit un système automatique de couplage comprenant un système de télémétrie laser pour mesurer une distance et une vitesse relative entre deux véhicules ferroviaires à coupler. Le système comprend également un dispositif de commande de freinage ou de traction.

DE 195 29 919 A1 décrit un système automatique de couplage comprenant des capteurs de vitesses et des capteurs de proximité entre les véhicules ferroviaires. Le système comprend également une station centrale de commande pour contrôler le freinage et les éléments d'accouplement automatiques entre les véhicules.

Un des buts de l'invention est d'obtenir un système automatique de couplage de véhicules ferroviaires permettant de diminuer les durées de manœuvre en tout point de la voie.

A cet effet l'invention a pour objet un système automatique de couplage de véhicules ferroviaires, prévu pour être embarqué sur un premier véhicule ferroviaire (4A), et comprenant :
- un système de télémétrie configuré pour réaliser des mesures entre le premier véhicule ferroviaire et un deuxième véhicule ferroviaire, et déterminer, à partir des mesures, une distance entre le premier véhicule ferroviaire et le deuxième véhicule ferroviaire et/ou une vitesse relative entre le premier véhicule ferroviaire et le deuxième véhicule ferroviaire, et
- un dispositif de commande configuré pour commander un système de freinage et/ou un système de traction du premier véhicule ferroviaire en fonction de la distance et/ou de la vitesse relative déterminées par le système de télémétrie, pour le rapprochement du premier véhicule ferroviaire vers le deuxième véhicule ferroviaire en vue de leur couplage mécanique,
dans lequel le système de télémétrie est configuré pour déterminer une accélération relative entre le premier véhicule ferroviaire et le deuxième véhicule ferroviaire, et pour commander le premier véhicule ferroviaire en fonction de l'accélération relative.

Selon des modes de réalisation particuliers, le système automatique de couplage comprend une ou plusieurs des caractéristiques suivantes:
- le système de télémétrie comprend un télémètre radioélectrique, un télémètre laser, un télémètre acoustique et/ou un télémètre optique ;
- le dispositif de commande est configuré pour commander le déplacement du premier véhicule ferroviaire en fonction d'un profil de vitesse prédéterminé ;
- le dispositif de commande comprend une cartographie contenant la topographie du réseau ferroviaire, le dispositif de commande régulant le système de freinage et/ou le système de traction en fonction de la cartographie ;
- le premier véhicule ferroviaire comprend, en outre, un dispositif de mesure de déplacement configuré pour réaliser une mesure entre le premier véhicule ferroviaire et le sol de manière à déterminer le déplacement du premier véhicule ferroviaire par rapport au sol ;
- le dispositif de mesure de déplacement comprend un odomètre ;
- le dispositif de commande est configuré pour commander le déplacement du premier véhicule ferroviaire en fonction de la mesure de distance fournie par le système de mesure de distance et/ou de la mesure de déplacement fournie par le dispositif de mesure de déplacement ;
- le dispositif de commande est configuré pour commander le déplacement du premier véhicule ferroviaire en fonction de la mesure de distance relative déterminée par le système de télémétrie pendant une phase d'approche, puis pour commander le déplacement du premier véhicule ferroviaire en fonction de la mesure de déplacement fournie par le dispositif de mesure de déplacement dans une phase d'accostage.

L'invention concerne également un procédé de couplage mécanique d'un premier véhicule ferroviaire et d'un deuxième véhicule ferroviaire, comprenant les étapes suivantes :
- déterminer la distance et/ou la vitesse relative entre le premier véhicule ferroviaire et le deuxième véhicule ferroviaire à l'aide d'un système de télémétrie embarqué dans le premier véhicule ferroviaire et configuré pour réaliser des mesures entre le premier véhicule ferroviaire et un deuxième véhicule ferroviaire ; et
- commander un système de freinage et/ou un système de traction du premier véhicule ferroviaire, à l'aide d'un dispositif de commande embarqué dans le premier véhicule ferroviaire, en fonction de la distance et/ou de la vitesse relative déterminées par le système de télémétrie embarqué,
dans lequel le procédé comprend une étape de détermination d'une accélération relative entre le premier véhicule ferroviaire (4A) et le deuxième véhicule ferroviaire (4B), et de commande du premier véhicule ferroviaire en fonction de l'accélération relative, par le système de télémétrie.

L'invention sera mieux comprise à la lecture de la description qui va suivre, donnée uniquement à titre d'exemple, et faite en se référant aux dessins annexés, sur lesquels :
- la figure 1 est une vue schématique représentant deux véhicules ferroviaires propres à se coupler automatiquement grâce à un système automatique de couplage embarqué; et
- la figure 2 est un graphique schématique illustrant un profil de vitesse suivi par le système automatique de couplage du train en approche pour le couplage.

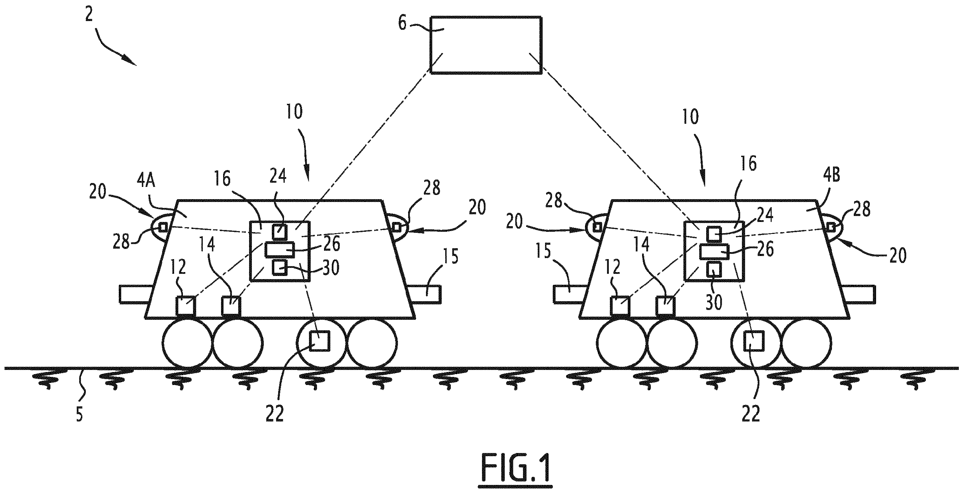

Comme illustré en partie sur la figure 1, un système ferroviaire 2 comprend des véhicules ferroviaires 4A, 4B sur une voie ferrée 5.

Le système ferroviaire 2 comprend un système d'exploitation 6 en communication avec chacun des véhicules ferroviaires 4A, 4B.

Les véhicules ferroviaires 4A, 4B sont des véhicules à pilotage automatique, avec ou sans opérateur à bord. En variante, les véhicules ferroviaires 4A, 4B sont des véhicules à pilotage manuel.

Les véhicule ferroviaire 4A, 4B sont analogues et seul un premier véhicule ferroviaire 4A et son fonctionnement pour le couplage mécanique de ce premier véhicule ferroviaire avec un deuxième véhicule ferroviaire 4B seront décrits en détail par la suite.

Le premier véhicule ferroviaire 4A comprend un système automatique de couplage 10 embarqué, configuré pour piloter le premier véhicule ferroviaire 4A pour réaliser une manœuvre de couplage mécanique du premier véhicule ferroviaire 4A sur un deuxième véhicule ferroviaire 4B.

Le premier véhicule ferroviaire 4A comprend un système de freinage 12, un système de traction 14 et un dispositif de couplage 15 pour le couplage mécanique du premier véhicule ferroviaire 4A sur le deuxième véhicule ferroviaire 4B. Le deuxième véhicule ferroviaire 4B comprend un dispositif de couplage mécanique 15 complémentaire de celui du premier véhicule ferroviaire 4A. Les dispositifs de couplage mécanique sont, par exemple des coupleurs « Scharfenberg ».

Le système automatique de couplage 10 comprend un système de télémétrie 20 configuré pour réaliser des mesures relatives entre le premier véhicule ferroviaire 4A et le deuxième véhicule ferroviaire 4B, et pour déterminer une distance, une vitesse relative et une accélération relative entre le premier véhicule ferroviaire 4A et le deuxième véhicule ferroviaire 4B.

Le système automatique de couplage 10 comprend un dispositif de mesure de déplacement 22, configuré pour réaliser des mesures absolues entre le premier véhicule ferroviaire 4A et le sol, et pour déterminer le déplacement absolu du premier véhicule ferroviaire 4A par rapport au sol, i.e. le déplacement du premier véhicule ferroviaire 4A le long de la voie ferrée 5.

Le système automatique de couplage 10 comprend, en outre, un dispositif de commande 16, tel qu'un dispositif de commande de train basé sur la communication (ou CBTC pour « Communication Based Train Contrôler » en anglais), configuré pour commander le déplacement du premier véhicule ferroviaire 4A en commandant l'actionnement des systèmes de freinage 12 et de traction 14, en fonction des mesures fournies par le système de télémétrie 20 et par le dispositif de mesure de déplacement 22.

Le système de télémétrie 20 est configuré pour mesurer la distance entre les premier et deuxième véhicules ferroviaires 4A, 4B, et calculer, à partir de mesures de distances successives, la vitesse relative et l'accélération relative entre les premier et deuxième véhicules ferroviaires 4A, 4B.

Le système de télémétrie 20 comprend un ensemble émetteur-récepteur 28 configuré pour réaliser une mesure de distance, par exemple d'une moyenne portée jusqu'à une courte portée, entre le premier véhicule ferroviaire 4A et le deuxième véhicule ferroviaire 4B.

Le système de télémétrie 20 comprend un télémètre radioélectrique (ou radar), un télémètre infrarouge, un télémètre laser, un télémètre acoustique et/ou un télémètre optique.

Le système de télémétrie 20 a avantageusement une portée de mesure comprise entre une portée minimale de dix centimètres et une portée maximale de quelques centaines de mètres.

Le système de télémétrie 20 comprend un module de calcul 24 configuré pour calculer la distance, la vitesse relative et l'accélération relative entre le premier véhicule ferroviaire 4A et le deuxième véhicule ferroviaire 4B en fonction des mesures.

Le système de télémétrie 20 présente avantageusement un faible encombrement et une faible consommation énergétique. Le système de télémétrie 20 est prévu pour une utilisation dans un environnement ferroviaire, notamment en matière de luminosité, poussière, vent, pluie, etc.

Avantageusement, le système de télémétrie 20 est disposé à l'avant et à l'extérieur du véhicule ferroviaire 4. Un système de télémétrie 20 est également disposé de chaque côté du véhicule ferroviaire.

Un télémètre radioélectrique (ou radar) est notamment un radar à ondes continues (ou radar à ondes entretenues) ou un radar pulsé. Un télémètre radioélectrique est notamment un radar Doppler pulsé, un radar à compression d'impulsion (ou CHIRP pour « Compressed High Intensity Radar Pulse en anglais »), notamment un radar à compression d'impulsion à modulation de fréquence et/ou à modulation de phase, un radar Doppler à ondes continues, ou un radar à ondes continues à modulation de fréquence (ou radar FMCW pour « Frequency Modulated Continuous Wave » en anglais).

Le radar comprend au moins un émetteur-récepteur propre à émettre des ondes radioélectriques et à détecter les ondes radioélectriques réfléchies par un obstacle. Le radar comprend un ensemble émetteur-récepteur configuré pour émettre et recevoir des ondes radio à courtes ou à longues distances, émettant respectivement un faisceau d'ondes large ou étroit. L'ensemble émetteur-récepteur comprend au moins un élément émetteur-récepteur ou, d'une part, au moins un élément émetteur, et, d'autre part, au moins un élément récepteur.

En option, le radar comprend un système d'orientation configuré pour orienter l'émetteur-récepteur du radar en fonction par exemple de la direction et/ou de la courbure de la voie ferrée 5. Plus particulièrement, le système d'orientation permet un balayage d'un angle en azimut de l'émetteur-récepteur du radar.

Un télémètre laser comprend une cellule émettrice émettant un faisceau laser et une cellule réceptrice captant tout signal laser réfléchi de tout obstacle à proximité. Le télémètre laser est apte à mesurer la différence de temps entre l'émission du signal et la réception d'une réflexion du signal, c'est-à-dire « le temps de vol », pour déterminer la distance et la vitesse relative entre les premier et deuxième véhicules ferroviaires 4A, 4B. Une cellule réceptrice du laser est avantageusement une photodiode.

Un télémètre laser est par exemple un télémètre laser infrarouge. Le télémètre laser est avantageusement un télémètre laser à balayage (ou scanner laser). De tels télémètres laser sont commercialisés notamment par la société IBEO Automotive Systems GmbH sous les noms LUX et SCALA.

Un télémètre acoustique est par exemple un télémètre à ultrasons.

Un télémètre optique est par exemple un télémètre comprenant au moins une caméra propre à capturer une image numérique et à traiter l'image numérique pour déterminer une mesure de distance.

Le dispositif de mesure de déplacement 22 est propre à mesurer un déplacement absolu du véhicule ferroviaire 4A le long de la voie ferrée 5. Le dispositif de mesure 22 mesure un déplacement absolu et/ou une vitesse de déplacement absolue, c'est-à-dire par rapport au sol ou à la voie ferrée 5, et non par rapport à un autre véhicule ferroviaire.

Le dispositif de mesure de déplacement 22 est un dispositif distinct du système de télémétrie 20.

Le dispositif de mesure de déplacement 22 mesure le déplacement du premier véhicule ferroviaire 4A par rapport au sol ou à la voie ferrée 5, de manière indépendante du système de télémétrie 20. Le système de télémétrie 20 détermine la distance, la vitesse relative et l'accélération relative entre les véhicules 4A te 4B indépendamment du dispositif de mesure de déplacement 22.

Le dispositif de mesure de déplacement 22 comprend avantageusement un odomètre (non représenté). L'odomètre est positionné sur l'essieu, par exemple au niveau d'une roue du premier véhicule ferroviaire 4A. L'odomètre mesure le déplacement angulaire de la roue de l'essieu, pour en déduire le déplacement longitudinal du premier véhicule ferroviaire 4A le long de la voie ferrée 5 et donc du sol.

Lorsque le système d'exploitation 6 commande le couplage mécanique du premier véhicule ferroviaire 4A et du deuxième véhicule ferroviaire 4B, le dispositif de commande 16 régule les systèmes de freinage 12 et de traction 14 et le dispositif de couplage 15 pour réaliser ce couplage mécanique.

Le dispositif de commande 16 est propre à recevoir les données déterminées par le système de télémétrie 20 et celles déterminées par le dispositif de mesure de déplacement 22, et à commander les systèmes de freinage 12 et de traction 14 du premier véhicule ferroviaire 4A en fonction de ces données, pour commander le déplacement du premier véhicule ferroviaire 4A.

Le dispositif de commande 16 comprend, dans une mémoire, un profil de vitesse 26 d'approche cible pour le couplage entre deux véhicules ferroviaires.

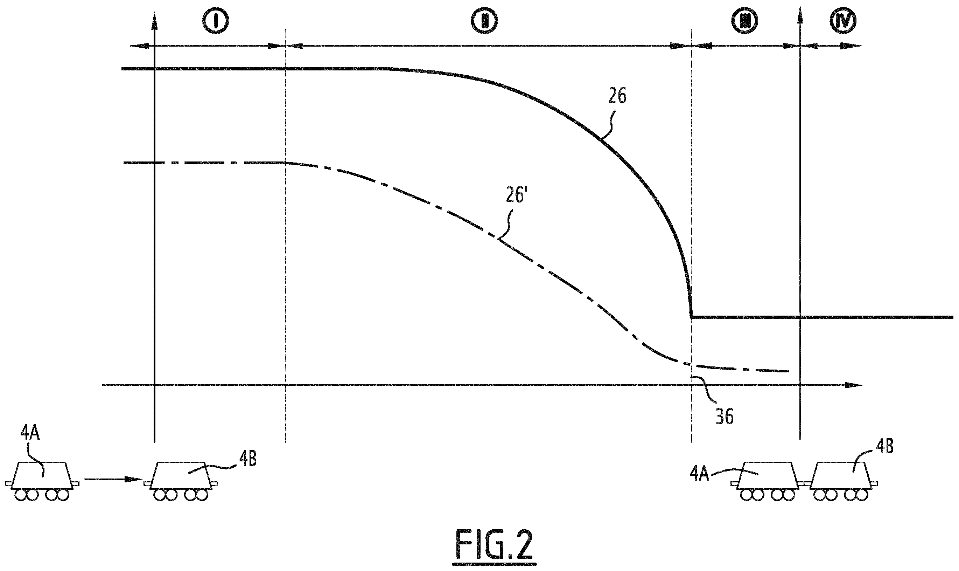

Comme illustré sur la figure 2, le profil de vitesse 26 d'approche de la cible détermine une procédure de couplage en plusieurs phases.

Le profil de vitesse 26 d'approche comprend, plus particulièrement, quatre phases successives : une première phase de demande de couplage (I), une deuxième phase d'approche (II), une troisième phase d'accostage (III) et une quatrième phase de couplage (IV).

Dans la première phase de demande de couplage, qui débute à la réception par le système automatique de couplage 10 d'une demande de couplage en provenance du système d'exploitation 6, le dispositif de commande 16 commande le déplacement du premier véhicule ferroviaire 4A vers le deuxième véhicule ferroviaire 4B jusqu'à la détection du deuxième véhicule ferroviaire 4B par le système de télémétrie 20.

Pendant la première phase de demande de couplage, le dispositif de commande 16 est configuré pour commander le déplacement du premier véhicule ferroviaire 4A en fonction de la position du premier véhicule ferroviaire 4A sur le réseau ferré, plus particulièrement en fonction de la position du premier véhicule ferroviaire 4A et de la position du deuxième véhicule ferroviaire 4B sur le réseau ferré, indépendamment des mesures fournies par le système de télémétrie 20 et par le dispositif de mesure de déplacement 22.

Dans la deuxième phase d'approche (II), mise en oeuvre de la détection du deuxième véhicule ferroviaire 4B jusqu'à une distance de basculement, par exemple égale à la portée minimale du système de télémétrie 20, le dispositif de commande 16 commande le déplacement du premier véhicule ferroviaire 4A en fonction de la distance relative et/ou de la vitesse relative fournies par le système de télémétrie 20. De préférence, le dispositif de commande 16 commande le déplacement du premier véhicule ferroviaire 4A indépendamment de la mesure de déplacement fournie par le dispositif de mesure de déplacement 22.

Dans la troisième phase d'accostage (III), mise en œuvre de la distance de basculement jusqu'au contact physique entre les dispositifs de couplage 15 de chacun des véhicules ferroviaires 4A, 4B, le dispositif de commande 16 commande le déplacement du premier véhicule ferroviaire 4A en fonction de position absolue fournie par dispositif de mesure de déplacement 22. De préférence, le dispositif de commande 16 commande le déplacement du premier véhicule ferroviaire 4A indépendamment de la mesure fournie par le système de télémétrie 20.

La quatrième phase de couplage (IV) s'étend du contact jusqu'au couplage effectif mécanique et électrique au niveau des dispositifs de couplage 15.

Le profil de vitesse 26 définit également une distance minimale 36 de sécurité. Le profil de vitesse 26 présente une vitesse de déplacement inférieure ou égale à 8 km/h à la distance minimale de sécurité 36. Le profil de vitesse 26 présente une vitesse de déplacement inférieure ou égale à 2,5 km/h au moment du couplage complet des deux véhicules ferroviaires 4.

La distance minimale 36 de sécurité est la distance à parcourir par le premier véhicule ferroviaire 4A en dessous de 8km/h jusqu'au deuxième véhicule ferroviaire 4B.

Ainsi, le dispositif de commande 16 commande le déplacement du premier véhicule ferroviaire 4A en fonction de la vitesse relative déterminée par le système de télémétrie 20, jusqu'à ce que la distance mesurée entre le premier véhicule ferroviaire 4A et le deuxième véhicule ferroviaire 4B soit inférieure ou égale à la distance de basculement.

Puis, le dispositif de commande 16 commande le déplacement du premier véhicule ferroviaire 4A en fonction de la mesure absolue de déplacement du premier véhicule ferroviaire 4A fournie par le dispositif de mesure de déplacement 22 de la distance de basculement jusqu'au couplage.

En option, dans les phases d'approche, d'accostage et/ou de couplage, le dispositif de commande 16 commande le déplacement du premier véhicule ferroviaire 4A en fonction d'une position du premier véhicule ferroviaire 4A sur le réseau ferré et/ou d'une position du deuxième véhicule ferroviaire sur le réseau ferré, fournie(s) par exemple par le système d'exploitation 6.

Grâce au système de télémétrie 20, les vitesses sont optimisées pour réaliser les différentes étapes de la procédure de couplage le plus rapidement possible. Il permet notamment de conserver une vitesse d'approche élevée, ajustée en continu, dans la deuxième phase d'approche (II), lorsque le dispositif de commande 16 commande le déplacement du premier véhicule ferroviaire 4A en fonction de la mesure relative de distance fournie par le système de télémétrie 20.

D'une manière illustrative, la figure 2 représente un profil de vitesse 26' qui correspond au profil de vitesse 26 cible auquel a été appliqué un coefficient de sécurité. Le profil de vitesse 26' est une homothétie du profil de vitesse 26.

Le profil de vitesse 26' comprend également les quatre phases de demande de couplage (I), d'approche (II), d'accostage (III), et de couplage (IV) et la distance minimale de sécurité 36.

Avantageusement, le dispositif de commande 16 est en outre configuré pour recevoir la position du premier véhicule ferroviaire 4A et la position du deuxième véhicule ferroviaire 4B sur la voie ferrée 5, et pour commander le système de freinage 12 et le système de traction 14 en fonction de la position du premier véhicule ferroviaire 4A sur la voie ferrée et/ou de la position du deuxième véhicule 4B sur la voie ferrée. La position du premier véhicule ferroviaire 4A et la position du deuxième véhicule ferroviaire 4B sur la voie ferrée 5 sont par exemple fournies au dispositif de commande 16 de manière connue par le système d'exploitation 6 comprenant un système de localisation des véhicules ferroviaires sur le réseau ferroviaire.

Avantageusement, le dispositif de commande 16 est en outre configuré pour commander le système de freinage 12 et le système de traction 14 en fonction de la topographie du réseau ferroviaire.

Tel qu'illustré, le dispositif de commande 16 comprend une cartographie 30 de la topographie du réseau ferroviaire, stockée dans une mémoire du dispositif de commande 16.

La cartographie 30 permet de sélectionner les données utiles en fonction de la topographie du réseau ferroviaire.

La cartographie 30 contient des données topographiques relatives au réseau ferroviaire (inclinaison des voies, creux, bosses, courbure des voies, devers...) pouvant influer sur la position relative des véhicules ferroviaires.

La cartographie 30 contient en option des données de position (ou localisation) instantanée des véhicules ferroviaires sur le réseau ferroviaire, fournies et mises à jour par exemple par le système d'exploitation 6.

Avantageusement, le système de télémétrie 20 effectue des mesures en fonction de la topographie et/ou des positions des véhicules ferroviaire sur le réseau ferroviaire, fournies par le système d'exploitation 6.

Dans un mode de réalisation, le système de télémétrie 20 est configuré pour détecter l'entrée du deuxième véhicule ferroviaire 4B dans un champs de détection du système de télémétrie 20 en fonction d'une position instantanée du premier véhicule ferroviaire et d'une position instantanée du deuxième véhicule ferroviaire sur le réseau ferré, fournies par exemple par le système d'exploitation 6, par exemple du fait d'une corrélation entre un nouvel objet détecté par le système de télémétrie 20 et les positions instantanées du premier véhicule ferroviaire et du deuxième véhicule ferroviaire.

Lorsque ces positions sont enregistrées dans la cartographie 30, cette dernière permet au système de télémétrie 20 de détecter l'entrée du deuxième véhicule ferroviaire 4B dans champs de détection du système de télémétrie 20.

En outre, le système de télémétrie 20 est configuré pour acquérir la courbure de la voie ferrée 5 en avant du premier véhicule ferroviaire 4A à partir de la topographie, et des angles d'azimut du deuxième véhicule ferroviaire 4B ciblé à détecter.

En option, le système de télémétrie 20 est configuré pour commander le système d'orientation de l'ensemble émetteur-récepteur du système de télémétrie 20 en fonction de la topographie. Ceci permet d'assurer une détection précoce, en orientant les émetteurs-récepteurs en fonction de la topographie de la voie ferrée 5.Un procédé de couplage entre un premier véhicule ferroviaire 4A et un deuxième véhicule ferroviaire 4B mis en œuvre à l'aide d'un système automatique de couplage 10 selon l'invention va être décrit plus en détails.

Initialement, le système d'exploitation 6 commande un couplage des premier et deuxième véhicules ferroviaires 4A, 4B.

Les instructions de couplage réceptionnées par le dispositif de commande 16 du premier véhicule ferroviaire 4A contiennent la localisation du deuxième véhicule ferroviaire 4B. Elles activent le système de couplage automatique 10. Le deuxième véhicule ferroviaire 4B est immobilisé.

Le premier véhicule ferroviaire 4A se déplace en direction du deuxième véhicule ferroviaire 4B. Il applique la procédure et le profil de vitesse 26 d'approche selon la première phase de demande de couplage (I).

Connaissant la localisation du deuxième véhicule ferroviaire 4B, le premier véhicule ferroviaire 4A se déplace en direction du deuxième véhicule ferroviaire 4B, dans la zone indiquée. Le premier véhicule ferroviaire 4A peut conserver une vitesse de déplacement normale correspondant à celle qu'il aurait en l'absence de l'activation du système de couplage automatique 10, mesurée par le dispositif de mesure de déplacement 22, jusqu'à la détection du deuxième véhicule ferroviaire 4B par le système de télémétrie 20.

A la détection du deuxième véhicule ferroviaire 4B, le profil de vitesse 26 passe en deuxième phase d'approche (II).

En phase d'approche (II), le dispositif de commande 16 ajuste la vitesse du premier véhicule ferroviaire 4A de telle sorte que la vitesse du premier véhicule ferroviaire 4A décroit, de manière contrôlée, jusqu'à atteindre une vitesse égale 8 km/h à une distance déterminée 34 entre le premier véhicule ferroviaire 4A et le deuxième véhicule ferroviaire 4B. Durant cette phase d'approche (II), le dispositif de commande 16 utilise avantageusement le système de mesure de distance 20 pour ajuster la vitesse relative de déplacement du premier véhicule ferroviaire 4A.

Ensuite, en phase d'accostage (III), le premier véhicule ferroviaire 4A poursuit son déplacement jusqu'à se trouver à la distance de basculement. Le dispositif de commande 16 régule les systèmes de traction 12 et de freinage 14 en fonction de la mesure de déplacement du premier véhicule ferroviaire 4A par rapport à la voie ferrée 5 fournie par le dispositif de mesure de déplacement 22.

La vitesse de déplacement du premier véhicule ferroviaire 4A évolue dans la phase d'accostage (III), représentée par une décroissance sur la figure 2 jusqu'à atteindre une vitesse de déplacement de 2,5 km/h à la distance de contact physique estimée lors de la phase d'approche (II). La phase d'accostage (III) se termine au contact physique au niveau des coupleurs 15, où commence la phase de couplage (IV).

Au contact physique, le premier véhicule ferroviaire 4A possède une inertie suffisante pour permettre un couplage mécanique du coupleur 15. Le couplage s'effectue au niveau des coupleurs 15 qui signalent la fin de la procédure au dispositif de commande 16 et au système d'exploitation 6.

Le système automatique de couplage 10 a pour avantage de pouvoir réaliser la manœuvre de couplage entre deux véhicules ferroviaires sur l'ensemble du réseau ferroviaire géré par le système d'exploitation 6.

Le système automatique de couplage 10 entre deux véhicules ferroviaires garantit une manœuvre de couplage automatisée dans un temps court grâce à une mesure précise en continue et en temps réel de la distance séparant les véhicules ferroviaires.

Le système automatique de couplage 10 s'adapte à tout type de réseau ferroviaire automatisé. Il ne nécessite pas d'installation spécifique au niveau des infrastructures. Le système automatique de couplage 10 s'adapte également à un réseau ferroviaire avec opérateur à bord, par exemple, de type tramway ou de type train à grande vitesse.

Le système automatique de couplage 10 permet de minimiser le temps d'approche.

## Revendications

1. Système automatique de couplage (10) de véhicules ferroviaires, prévu pour être embarqué sur un premier véhicule ferroviaire (4A), et comprenant :
- un système de télémétrie (20) configuré pour réaliser des mesures entre le premier véhicule ferroviaire et un deuxième véhicule ferroviaire, et déterminer, à partir des mesures, une distance entre le premier véhicule ferroviaire (4A) et le deuxième véhicule ferroviaire (4B) et/ou une vitesse relative entre le premier véhicule ferroviaire (4A) et le deuxième véhicule ferroviaire (4B), et
- un dispositif de commande (16) configuré pour commander un système de freinage (12) et/ou un système de traction (14) du premier véhicule ferroviaire (4A) en fonction de la distance et/ou de la vitesse relative déterminées par le système de télémétrie (20), pour le rapprochement du premier véhicule ferroviaire (4A) vers le deuxième véhicule ferroviaire (4B) en vue de leur couplage mécanique,
**caractérisé en ce que** le système de télémétrie (20) est configuré pour déterminer une accélération relative entre le premier véhicule ferroviaire (4A) et le deuxième véhicule ferroviaire (4B), et pour commander le premier véhicule ferroviaire en fonction de l'accélération relative.

2. Système automatique de couplage (10) selon la revendication 1, dans lequel le système de télémétrie (20) comprend un télémètre radioélectrique, un télémètre laser, un télémètre acoustique et/ou un télémètre optique.

3. Système automatique de couplage (10) selon l'une quelconque des revendications 1 à 2, dans lequel le dispositif de commande (16) est configuré pour commander le déplacement du premier véhicule ferroviaire (4A) en fonction d'un profil de vitesse (26) prédéterminé.

4. Système automatique de couplage (10) selon l'une quelconque des revendications 1 à 3, dans lequel le dispositif de commande (16) comprend une cartographie (30) contenant la topographie du réseau ferroviaire, le dispositif de commande (16) régulant le système de freinage (12) et/ou le système de traction (14) en fonction de la cartographie (30).

5. Système automatique de couplage (10) selon l'une des revendications 1 à 4, dans lequel le premier véhicule ferroviaire (4A) comprend, en outre, un dispositif de mesure de déplacement (22) configuré pour réaliser une mesure entre le premier véhicule ferroviaire et le sol de manière à déterminer le déplacement du premier véhicule ferroviaire (4A) par rapport au sol.

6. Système automatique de couplage (10) selon la revendication 5, dans lequel le dispositif de mesure de déplacement (22) comprend un odomètre.

7. Système automatique de couplage (10) selon la revendication 5 ou la revendication 6, dans lequel le dispositif de commande (16) est configuré pour commander le déplacement du premier véhicule ferroviaire (4A) en fonction de la mesure de distance fournie par le système de mesure de distance (20) et/ou de la mesure de déplacement fournie par le dispositif de mesure de déplacement (22).

8. Système automatique de couplage (10) selon l'une quelconque des revendications 5 à 7, dans lequel le dispositif de commande (16) est configuré pour commander le déplacement du premier véhicule ferroviaire (4A) en fonction de la mesure de distance relative déterminée par le système de télémétrie (20) pendant une phase d'approche, puis pour commander le déplacement du premier véhicule ferroviaire (4A) en fonction de la mesure de déplacement fournie par le dispositif de mesure de déplacement (22) dans une phase d'accostage.

9. Procédé de couplage mécanique d'un premier véhicule ferroviaire (4A) et d'un deuxième véhicule ferroviaire (4B), comprenant les étapes suivantes :
- déterminer la distance et/ou la vitesse relative entre le premier véhicule ferroviaire (4A) et le deuxième véhicule ferroviaire (4B) à l'aide d'un système de télémétrie (20) embarqué dans le premier véhicule ferroviaire (4A) et configuré pour réaliser des mesures entre le premier véhicule ferroviaire et un deuxième véhicule ferroviaire ; et
- commander un système de freinage (12) et/ou un système de traction (14) du premier véhicule ferroviaire (4A), à l'aide d'un dispositif de commande (16) embarqué dans le premier véhicule ferroviaire (4A), en fonction de la distance et/ou de la vitesse relative déterminées par le système de télémétrie (20) embarqué,
**caractérisé en ce que** le procédé comprend une étape de détermination d'une accélération relative entre le premier véhicule ferroviaire (4A) et le deuxième véhicule ferroviaire (4B), et de commande du premier véhicule ferroviaire en fonction de l'accélération relative, par le système de télémétrie.

## Patentansprüche

1. Automatisches Kuppelsystem (10) für Schienenfahrzeuge, das dazu vorgesehen ist, um an Bord eines ersten Schienenfahrzeugs (4A) zu sein, und das aufweist:
- ein Telemetrie-System (20), das konfiguriert ist zum Durchführen von Messungen zwischen dem ersten Schienenfahrzeug und einem zweiten Schienenfahrzeug und Ermitteln, ausgehend von den Messungen, eines Abstands zwischen dem ersten Schienenfahrzeug (4A) und dem zweiten Schienenfahrzeug (4B) und/oder einer Relativgeschwindigkeit zwischen dem ersten Schienenfahrzeug (4A) und dem zweiten Schienenfahrzeug (4B) und
- eine Steuervorrichtung (16), die konfiguriert ist zum Steuern eines Bremssystems (12) und/oder eines Antriebssystems (14) des ersten Schienenfahrzeugs (4A) in Abhängigkeit von dem Abstand und/oder der Relativgeschwindigkeit, die mittels des Telemetrie-Systems (20) ermittelt werden, für das Annähern des ersten Schienenfahrzeugs (4A) an das zweite Schienenfahrzeug (4B) hin zwecks deren mechanischen Kuppelns,
**dadurch gekennzeichnet, dass** das Telemetrie-System (20) konfiguriert ist zum Ermitteln einer Relativbeschleunigung zwischen dem ersten Schienenfahrzeug (4A) und dem zweiten Schienenfahrzeug (4B) und zum Steuern des ersten Schienenfahrzeugs in Abhängigkeit von der Relativbeschleunigung.

2. Automatisches Kuppelsystems (10) gemäß Anspruch 1, wobei das Telemetrie-System (20) einen Funkentfernungsmesser, einen Laserentfernungsmesser, einen akustischen Entfernungsmesser und/oder einen optischen Entfernungsmesser aufweist.

3. Automatisches Kuppelsystem (10) gemäß irgendeinem der Ansprüche 1 bis 2, wobei die Steuervorrichtung (16) konfiguriert ist zum Steuern der Verlagerung des ersten Schienenfahrzeugs (4A) in Abhängigkeit von einem vorbestimmten Geschwindigkeitsprofil (26).

4. Automatisches Kuppelsystem (10) gemäß irgendeinem der Ansprüche 1 bis 3, wobei die Steuervorrichtung (16) eine Kartographie (30) aufweist, die eine Topographie des Schienennetzes enthält, wobei die Steuervorrichtung (16) das Bremssystem (12) und/oder das Antriebssystem (14) in Abhängigkeit von der Kartographie (30) regelt.

5. Automatisches Kuppelsystem (10) gemäß einem der Ansprüche 1 bis 4, wobei das erste Schienenfahrzeug (4A) ferner eine Verlagerungsmessvorrichtung (22) aufweist, die konfiguriert ist zum Durchführen einer Messung zwischen dem ersten Schienenfahrzeug und dem Boden, um die Verlagerung des ersten Schienenfahrzeugs (4A) bezüglich des Bodens zu ermitteln.

6. Automatisches Kuppelsystem (10) gemäß Anspruch 5, wobei die Verlagerungsmessvorrichtung (22) einen Schrittzähler aufweist.

7. Automatisches Kuppelsystem (10) gemäß Anspruch 5 oder Anspruch 6, wobei die Steuervorrichtung (16) konfiguriert ist zum Steuern der Verlagerung des ersten Schienenfahrzeugs (4A) in Abhängigkeit von der Abstandsmessung, die von dem Abstandsmesssystem (20) geliefert wird, und/oder von der Verlagerungsmessung, die von der Verlagerungsmessvorrichtung (22) geliefert wird.

8. Automatisches Kuppelsystem (10) gemäß irgendeinem der Ansprüche 5 bis 7, wobei die Steuervorrichtung (16) konfiguriert ist zum Steuern der Verlagerung des ersten Schienenfahrzeugs (4A) in Abhängigkeit von der Relativabstandsmessung, die vom Telemetrie-System (20) ermittelt wird während einer Annährungsphase, und dann zum Steuern der Verlagerung des ersten Schienenfahrzeugs (4A) in Abhängigkeit von der Verlagerungsmessung, die von der Verlagerungsmessvorrichtung (22) geliefert wird in einer Anlegephase.

9. Verfahren zum mechanischen Kuppeln eines ersten Schienenfahrzeugs (4A) und eines zweiten Schienenfahrzeugs (4B), aufweisend die folgenden Schritte:
- Ermitteln des Abstands und/oder der Relativgeschwindigkeit zwischen dem ersten Schienenfahrzeug (4A) und dem zweiten Schienenfahrzeug (4B) mittels eines Telemetrie-Systems (20), das an Bord des ersten Schienenfahrzeugs (4A) ist und konfiguriert ist zum Durchführen von Messungen zwischen dem ersten Schienenfahrzeug und dem zweiten Schienenfahrzeug, und
- Steuern eines Bremssystems (12) und/oder eines Antriebssystems (14) des ersten Schienenfahrzeugs (4A) mittels einer Steuervorrichtung (16), die an Bord des ersten Schienenfahrzeugs (4A) ist, in Abhängigkeit von dem Abstand und/oder der Relativgeschwindigkeit, die von der bordeigenen Telemetrie-Vorrichtung ermittelt werden,
**dadurch gekennzeichnet, dass** das Verfahren aufweist einen Schritt des Ermittelns einer Relativbeschleunigung zwischen dem ersten Schienenfahrzeug (4A) und dem zweiten Schienenfahrzeug (4B), und des Steuerns des ersten Schienenfahrzeugs in Abhängigkeit von der Relativbeschleunigung, mittels des Telemetrie-Systems.

## Claims

1. Automatic coupling system (10) for railway vehicles, which system is intended to be provided on board a first railway vehicle (4A) and comprises:
- a telemetry system (20) configured to carry out measurements between the first railway vehicle and a second railway vehicle and to determine, on the basis of the measurements, a distance between the first railway vehicle (4A) and the second railway vehicle (4B) and/or a relative speed between the first railway vehicle (4A) and the second railway vehicle (4B), and
- a control device (16) configured to control a braking system (12) and/or a traction system (14) of the first railway vehicle (4A) in dependence on the distance and/or the relative speed determined by the telemetry system (20), in order to move the first railway vehicle (4A) closer to the second railway vehicle (4B) for the mechanical coupling thereof,
**characterised in that** the telemetry system (20) is configured to determine a relative acceleration between the first railway vehicle (4A) and the second railway vehicle (4B) and to control the first railway vehicle in dependence on the relative acceleration.

2. Automatic coupling system (10) according to claim 1, wherein the telemetry system (20) comprises a radio telemeter, a laser telemeter, an acoustic telemeter and/or an optical telemeter.

3. Automatic coupling system (10) according to either claim 1 or claim 2, wherein the control device (16) is configured to control the displacement of the first railway vehicle (4A) in dependence on a predetermined speed profile (26).

4. Automatic coupling system (10) according to any one of claims 1 to 3, wherein the control device (16) comprises a map (30) containing the topography of the railway network, the control device (16) controlling the braking system (12) and/or the traction system (14) in dependence on the map (30).

5. Automatic coupling system (10) according to any one of claims 1 to 4, wherein the first railway vehicle (4A) further comprises a displacement-measuring device (22) configured to carry out a measurement between the first railway vehicle and the ground so as to determine the displacement of the first railway vehicle (4A) relative to the ground.

6. Automatic coupling system (10) according to claim 5, wherein the displacement-measuring device (22) comprises an odometer.

7. Automatic coupling system (10) according to claim 5 or claim 6, wherein the control device (16) is configured to control the displacement of the first railway vehicle (4A) in dependence on the distance measurement provided by the distance-measuring system (20) and/or in dependence on the displacement measurement provided by the displacement-measuring device (22).

8. Automatic coupling system (10) according to any one of claims 5 to 7, wherein the control device (16) is configured to control the displacement of the first railway vehicle (4A) in dependence on the relative distance measurement determined by the telemetry system (20) during an approach phase, then to control the displacement of the first railway vehicle (4A) in dependence on the displacement measurement provided by the displacement-measuring device (22) in a docking phase.

9. Method for mechanically coupling a first railway vehicle (4A) and a second railway vehicle (4B), comprising the following steps:
- determining the distance and/or the relative speed between the first railway vehicle (4A) and the second railway vehicle (4B) by means of a telemetry system (20) which is provided on board the first railway vehicle (4A) and configured to carry out measurements between the first railway vehicle and a second railway vehicle; and
- controlling a braking system (12) and/or a traction system (14) of the first railway vehicle (4A) by means of a control device (16) provided on board the first railway vehicle (4A) in dependence on the distance and/or the relative speed determined by the on-board telemetry system (20),
**characterised in that** the method comprises a step of determining a relative acceleration between the first railway vehicle (4A) and the second railway vehicle (4B) and of controlling the first railway vehicle in dependence on the relative acceleration, by the telemetry system.
